# EUROPEAN PATENT APPLICATION

(11) **EP 4 850 975 A1**
(43) Date of publication of application: **09.12.2026**
(21) Application number: 26181602.9
(22) Date of filing: 28.05.2026
(51) Int. Cl.: B60L 58/18

(54) **ELECTRIC WORKING MACHINE**

(30) Priority: 06.06.2025 JP 2025095036
(71) Applicant: Kubota Corporation, Osaka-shi, Osaka 530-0011 (JP)
(72) Inventor: KOZEKI, Takahiro, Sakai-shi, Osaka 590-0908 (JP)
(74) Representative: Müller-Boré & Partner Patentanwälte PartG mbB

(57) **Abstract**

The present invention includes a battery (B1, B2) which is chargeable and dischargeable, an electric device (IV) to be supplied with electric power from the battery (B1, B2), a charging port (CP) to be connected to an electric power source, and an electric circuit (6) to switch between an electric power supplying state in which the battery (B1, B2) and the electric device (IV) are electrically connected to each other and a charging state in which the battery (B1, B2) and the charging port (CP) are electrically connected to each other. The electric circuit (6) includes a first electric path (60) leading to the electric device (IV) and provided with a first relay (600) to open and close to break and make the first electric path (60), a second electric path (61) leading to the charging port (CP) and provided with a second relay (610) to open and close to break and make the second electric path (61), and a third electric path (62) leading to the battery (B1, B2) and provided with a protective fuse (620). The first electric path (60) and the second electric path (61) join each other, and the third electric path (62) is connected to a junction point (JP) of the first electric path (60) and the second electric path (61). The electric circuit (6) is configured to be switched between the charging state and the electric power supplying state by combining opening or closing of the first relay (600) and opening or closing of the second relay (610).

## Description

### BACKGROUND OF THE INVENTION

### Field of the Invention

The present invention relates to electric working machines each operated by electric power supplied from one or more batteries.

### Description of the Related Art

Recently, electric working machines have been provided as working machines such as construction machines and agricultural machines. The electric working machines each include a battery which is chargeable and dischargeable, an electric device to be supplied with electric power from the battery, a charging port to be connected to an electric power source, and an electric circuit to switch between an electric power supplying state in which the battery and the electric device are electrically connected to each other and a charging state in which the battery and the charging port are electrically connected to each other.

The electric circuit includes a relay to switch between the charging state and the electric power supplying state and a protective fuse to protect the circuitry. The relay and the protective fuse are located in, for example, a junction box and provided in different electric power input and output systems (for example, see Japanese Unexamined Patent Application Publication No. 2023-12660). That is, the electric circuit includes a plurality of protective fuses each located in a corresponding one of a plurality of electric paths such as an electric path leading to the charging port, an electric path leading to the electric device, and an electric path leading to the battery. When a current larger than a rated current flows through an electric path due to an anomaly in the electric device or the like, a protective fuse in this electric path melts to suppress continuation of the supply of electric power to this electric device and bypassing of electricity to other circuits and devices.

### SUMMARY OF THE INVENTION

In many cases, the load of work performed with a working machine is large. Thus, a large current flows through the electric circuit of the electric working machine during the work. That is, since the rated electric power of the electric circuit in the electric working machine is high, a protective fuse with a large electric capacity is used. As a result, the size of the protective fuse itself increases. Furthermore, in the related-art electric working machine, a large protective fuse is located in each of the plurality of electric paths. Thus, the space occupancy rate of the protective fuse in the electric circuit increases. That is, when a plurality of large protective fuses are located, the number of spaces occupied by such protective fuses increases. As a result, arrangement of other devices is restricted by the plurality of protective fuses and the plurality of protective fuses cause an increase in size of the devices.

Accordingly, the present invention is intended to provide an electric working machine in which the space occupancy rate of a protective fuse can be reduced while an electric circuit is protected.

An electric working machine according to an example embodiment of the present invention includes a battery which is chargeable and dischargeable, an electric device to be supplied with electric power from the battery, a charging port to be connected to an electric power source, and an electric circuit to switch between an electric power supplying state in which the battery and the electric device are electrically connected to each other and a charging state in which the battery and the charging port are electrically connected to each other, wherein the electric circuit includes a first electric path leading to the electric device and provided with a first relay to open and close to break and make the first electric path, a second electric path leading to the charging port and provided with a second relay to open and close to break and make the second electric path, and a third electric path leading to the battery and provided with a protective fuse, the first electric path and the second electric path join each other, and the third electric path is connected to a junction point of the first electric path and the second electric path, and the electric circuit is configured to be switched between the charging state and the electric power supplying state by combining opening or closing of the first relay and opening or closing of the second relay.

### Advantageous Effects of Invention

According to the present invention, the space occupancy rate of a fuse can be reduced while the electric circuit is protected.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a perspective view of the entirety of a working machine (backhoe) according to an example embodiment of the present invention.
FIG. 2 is an exploded perspective view of the working machine (backhoe) according to the example embodiment.
FIG. 3 is a perspective view of a portion of the working machine (backhoe) according to the example embodiment, illustrating the portion including a charging port (small window) and a region around the charging port.
FIG. 4 is a perspective view of the inside of the working machine (backhoe) according to the example embodiment, seen from a diagonally forward left direction.
FIG. 5 is a perspective view of the inside of the working machine (backhoe) according to the example embodiment, seen from a diagonally rearward right direction.
FIG. 6 is a perspective view of a junction box of the working machine (backhoe) according to the example embodiment seen from one side in the lateral direction.
FIG. 7 is a perspective view of the junction box of the working machine (backhoe) according to the example embodiment seen from the other side in the lateral direction.
FIG. 8 is a plan view of an electric circuit (substrate) located in the junction box of the working machine (backhoe) according to the example embodiment.
FIG. 9 is an electric circuit diagram of the working machine (backhoe) according to the example embodiment.
FIG. 10 is an electric circuit diagram of the working machine (backhoe) according to another example embodiment of the present invention.
FIG. 11 is an electric circuit diagram of the working machine (backhoe) according to a different example embodiment of the present invention.
FIG. 12 is an electric circuit diagram of the working machine (backhoe) according to still another example embodiment of the present invention.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Hereinafter, example embodiments of the present invention will be described with reference to the drawings.

A working machine fulfills the functions corresponding to the object of work. The working machine according to the present invention may be a construction machine, an agricultural machine, or the like and is an electric working machine to fulfill the functions due to reception of supplied electric power. In the present example embodiment, as an example of the electric working machine, a backhoe (electric backhoe) as one of construction machines is described.

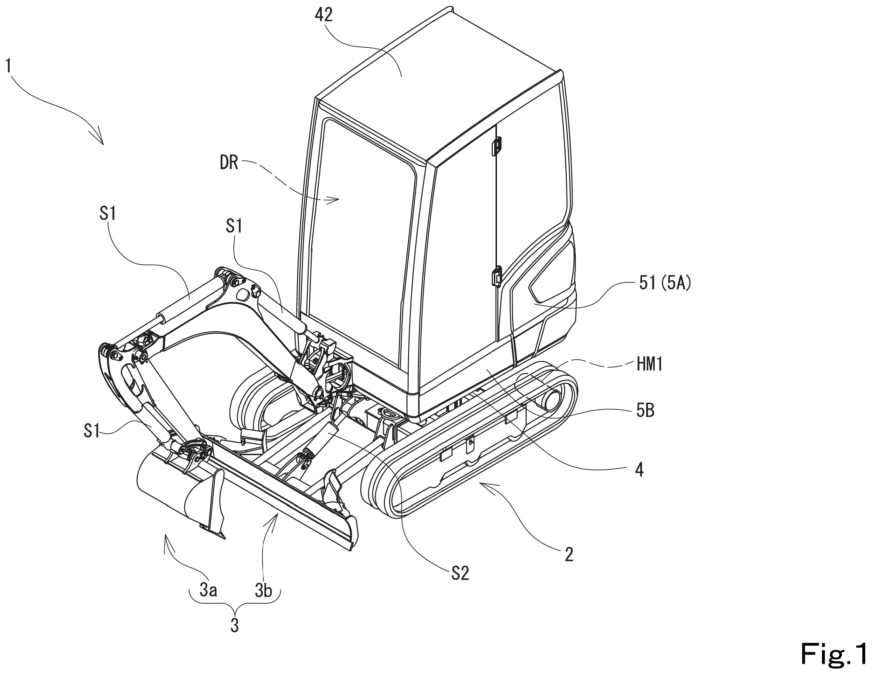

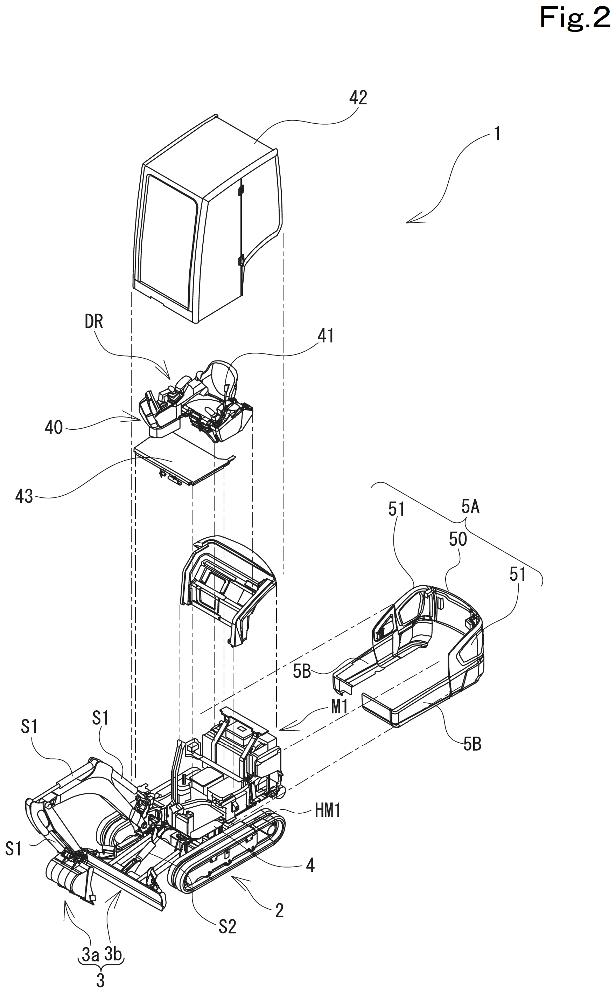

As illustrated in FIGS. 1 and 2, an electric working machine 1 is to travel. That is, the electric working machine 1 includes a traveling device 2. Although the traveling device 2 may be of a tire type, the traveling device 2 is of a crawler type according to the present example embodiment. The electric working machine 1 also includes at least one working device 3 to perform predetermined work. The electric working machine 1 according to the present example embodiment is a backhoe. Thus, the electric working machine 1 includes a shovel 3a and a dozer 3b as the working devices 3.

According to the present example embodiment, the traveling device 2 and the working devices 3 (the shovel 3a and the dozer 3b) are hydraulically driven. Thus, the traveling device 2 includes hydraulic motors HM1 rotated by supplied hydraulic fluid. The shovel 3a includes hydraulic cylinders S1. The dozer 3b includes a hydraulic cylinder S2. The hydraulic cylinders S1 and S2 extend/contract due to supply/discharge of the hydraulic fluid.

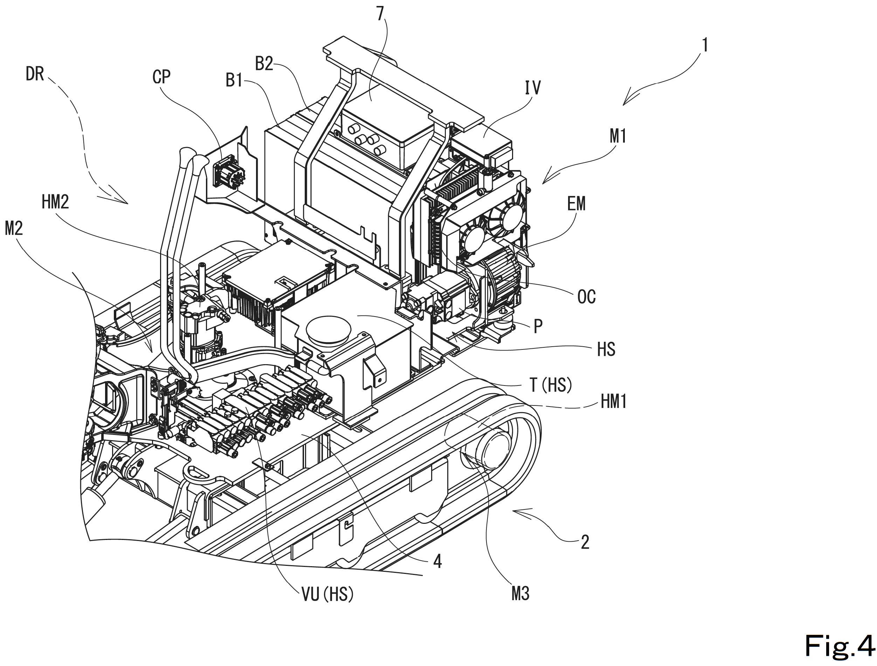

The electric working machine 1 also includes a slewing platform (swivel base) 4 supported at the traveling device 2 and rotatable about the axis (not illustrated) extending in the up-down direction. Together with the slewing platform 4, the electric working machine 1 includes a slewing motor HM2 (see FIG. 4) to rotate the slewing platform 4. The slewing platform 4 is also hydraulically driven, and the electric working machine 1 includes a hydraulic motor HM2 as the slewing motor HM2.

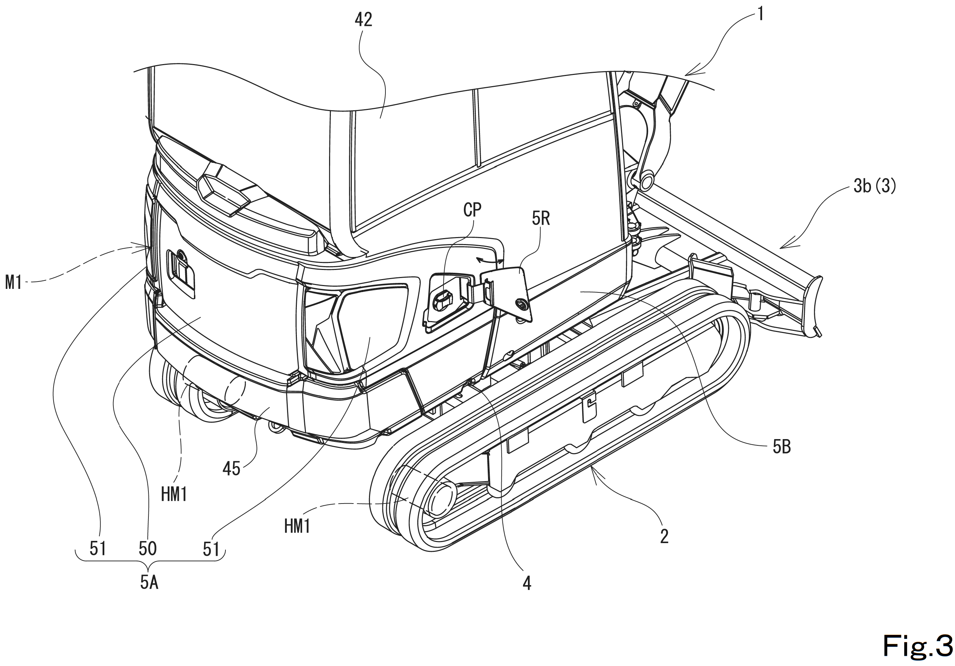

As illustrated in FIG. 2, an operating device 40 to operate the electric working machine 1, an operator's seat 41 on which the operator is seated, and the like are located on the slewing platform 4. The electric working machine 1 also includes an operator's seat protector 42 to protect the operator's seat 41 (operator). The operator's seat protector 42 according to the present example embodiment covers the operator's seat 41 and the operating device 40 and is a cabin to define a cab DR. Instead of the cabin 42, the operator's seat protector 42 may be a canopy including a roof located higher than the operator's seat 41. As illustrated in FIGS. 2 and 3, the electric working machine 1 includes a hood 5A which is located rearward of the operator's seat protector 42 and defines a machine room M1 (hereinafter referred to as a rear machine room M1) to house at least one predetermined device located on the slewing platform 4.

The hood 5A is located between a rear surface of the cabin 42 and a rear end of the slewing platform 4 such that a lower end of the hood 5A is along a rear end edge of the slewing platform 4 in a state in which the rear machine room M1 is defined (a state in which the at least one device is covered). A counterweight 45 is mounted in a rear end portion of the slewing platform 4. Thus, the lower end of the hood 5A is substantially placed on the counterweight 45. Specifically, the hood 5A includes a rear portion 50 along the rear end of the slewing platform and a pair of side portions 51 extending forward from both ends of the rear portion 50 in the lateral direction.

As a result, the hood 5A is in a U shape in plan view. In the hood 5A configured as above, in a state in which the rear machine room M1 is defined, the rear portion 50 is located on the counterweight 45 and the pair of side portions 51 extend along both side ends of the slewing platform 4. According to the present example embodiment, a lower end of a rear portion of the cabin 42 is located higher than a lower portion of a front portion of the cabin 42. Thus, the pair of side portions 51 are located between the rear portion of the cabin 42 and the slewing platform 4. That is, the pair of side portions 51 of the hood 5A close a space between the rear portion of the cabin 42 and the slewing platform 4 to make the rear machine room M1 an enclosed space. Thus, the rear machine room M1 is located from the rear end of the slewing platform 4 to a lower region of the rear portion of the cabin 42.

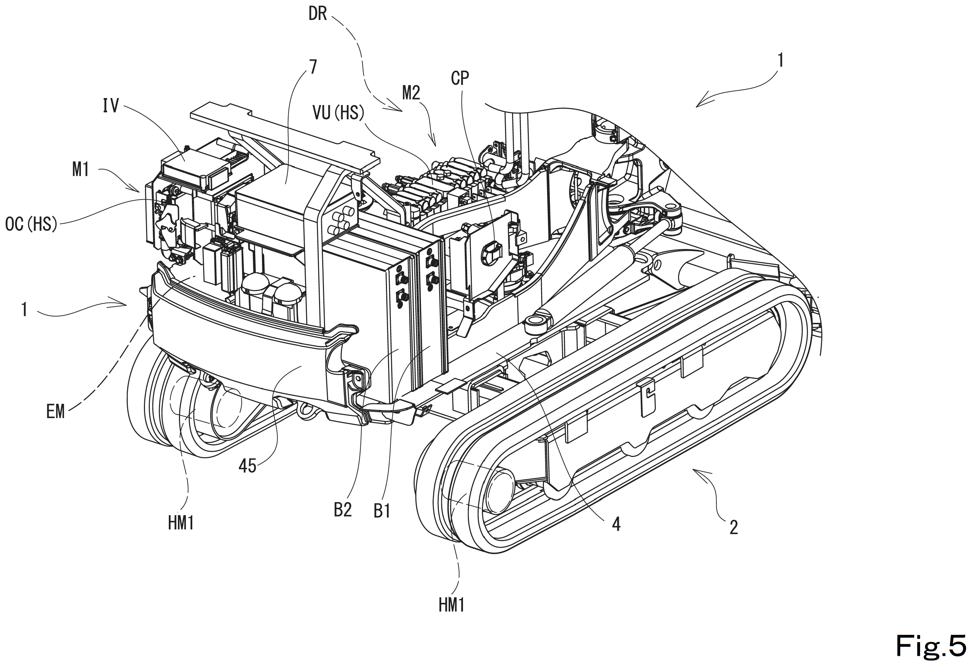

As illustrated in FIGS. 4 and 5, the devices such as batteries B1 and B2, an electric motor EM, a charging port CP, and a hydraulic pump P (see FIG. 4) are located in the rear machine room M1. The charging port CP is located on one side (right side) in the lateral direction perpendicular to the up-down direction and the front-rear direction. Along with this, as illustrated in FIG. 3, a small window portion 52 to open and close is provided in one of the side portions 51 (side portion 51 on the right side) of the hood 5A, and the charging port CP is exposed to the outside in a state in which the small window portion 52 is opened. That is, the charging port CP is located at a position corresponding to the small window portion 52.

On the assumption of the above-described configuration, as illustrated in FIG. 2, the shovel 3a is coupled to and supported by a front end portion of the slewing platform 4, and the dozer 3b is coupled to and supported by the traveling device 2 (a base to support the crawlers). Thus, the working devices 3 (the shovel 3a and the dozer 3b) extend forward of the operator's seat 41 (cab DR).

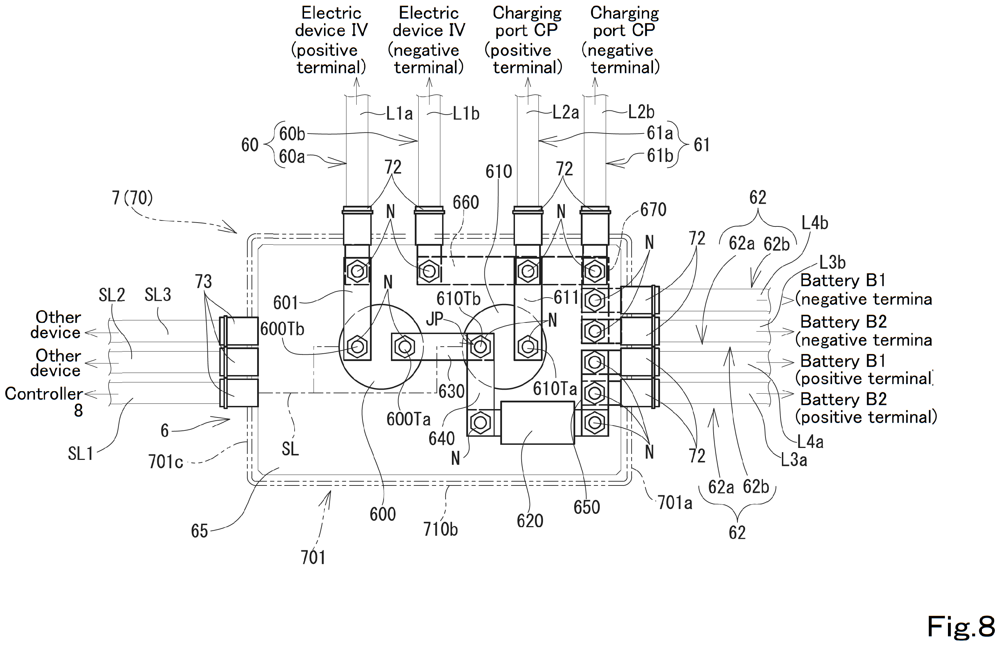

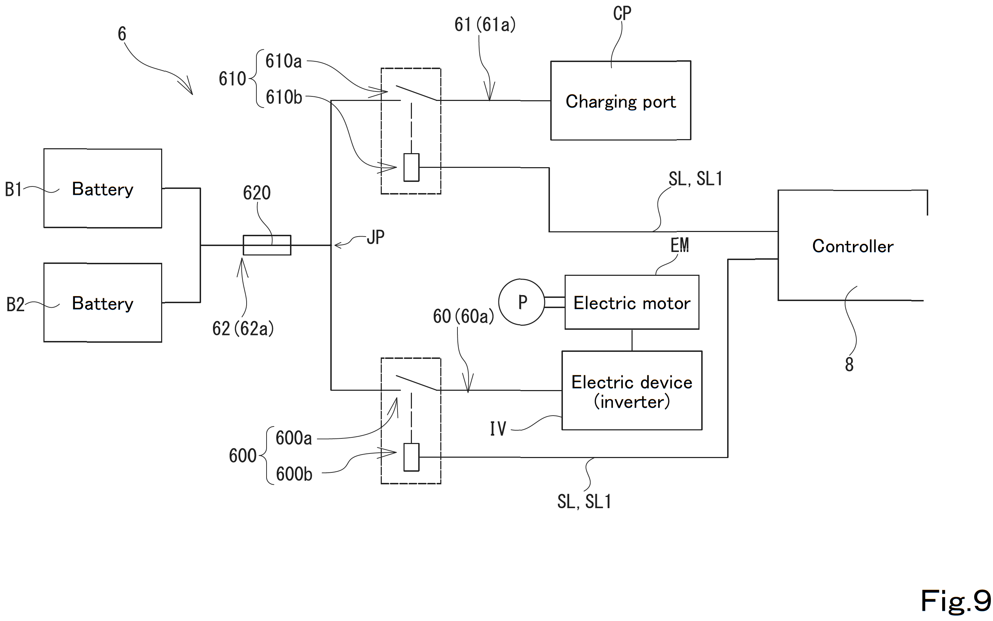

As described above, the electric working machine 1 is electrically driven, and includes, as illustrated in FIGS. 4 and 5, the batteries B1 and B2 which are chargeable and dischargeable (rechargeable), an electric device IV to be supplied with electric power from the batteries B1 and B2, the charging port CP (see FIG. 5) to be connected to an electric power source, and an electric circuit 6 (see FIGS. 8 and 9) to switch between an electric power supplying state in which the batteries B1 and B2 and the electric device IV are electrically connected to each other and a charging state in which the batteries B1 and B2 and the charging port CP are electrically connected to each other.

Furthermore, as described above, the traveling device 2, the working devices 3, and the slewing platform 4 are hydraulically driven. Thus, as illustrated in FIG. 5, the electric working machine 1 includes a hydraulic system HS (see FIG. 5) to supply the hydraulic fluid to the hydraulic motors HM1 to drive the traveling device 2, the slewing motor HM2 (hydraulic motor HM2) to drive the slewing platform 4, and the hydraulic cylinders S1 and S2 (see FIGS. 1 and 2) to drive the working devices 3. Specifically, the electric working machine 1 according to the present example embodiment includes the traveling device 2 to travel, the working devices 3 to perform predetermined work, the hydraulic system HS including the hydraulic pump P and configured to actuate the traveling device 2 and the working devices 3 by the hydraulic fluid delivered by the hydraulic pump P, the electric motor EM to drive the hydraulic pump P, and the electric device IV which is an inverter IV to control drive of the electric motor EM.

Other than the hydraulic pump P, the hydraulic system HS includes a hydraulic tank T to store the hydraulic fluid, an oil cooler OC to cool the hydraulic fluid, a valve unit VU (see FIG. 4) to switch a fluid passage to circulate the hydraulic fluid, and the like. The hydraulic pump P, the hydraulic tank T, the oil cooler OC, and the valve unit VU (see FIG. 4) are fluidically connected through piping (hydraulic piping).

According to the present example embodiment, out of the devices included in the hydraulic system HS, the hydraulic pump P and the oil cooler OC are located in the rear machine room M1. A junction box 7 to house part of the electric circuit 6 is located in the rear machine room M1.

In FIG. 4, which is illustrated with a floor plate 43 removed, the floor plate 43 of the operator's seat 41 to define, together with the operator's seat protector 42 (cabin 42), the cab DR, is located higher than the slewing platform 4, and a space is provided between the floor plate 43 and the slewing platform 4. Thus, the electric working machine 1 according to the present example embodiment includes a pair of side covers 5B (see FIGS. 2 and 3) to close the space between the floor plate 43 and the operator's seat protector 42 (cabin 42) on both sides in the lateral direction. Thus, the space between the floor plate 43 and the operator's seat protector 42 (cabin 42) is made an enclosed space to serve as a machine room M2 (hereinafter referred to as an "underfloor machine room M2") to locate at least one predetermined device. According to the present example embodiment, the valve unit VU and the hydraulic tank T included in the hydraulic system HS are located in the underfloor machine room M2.

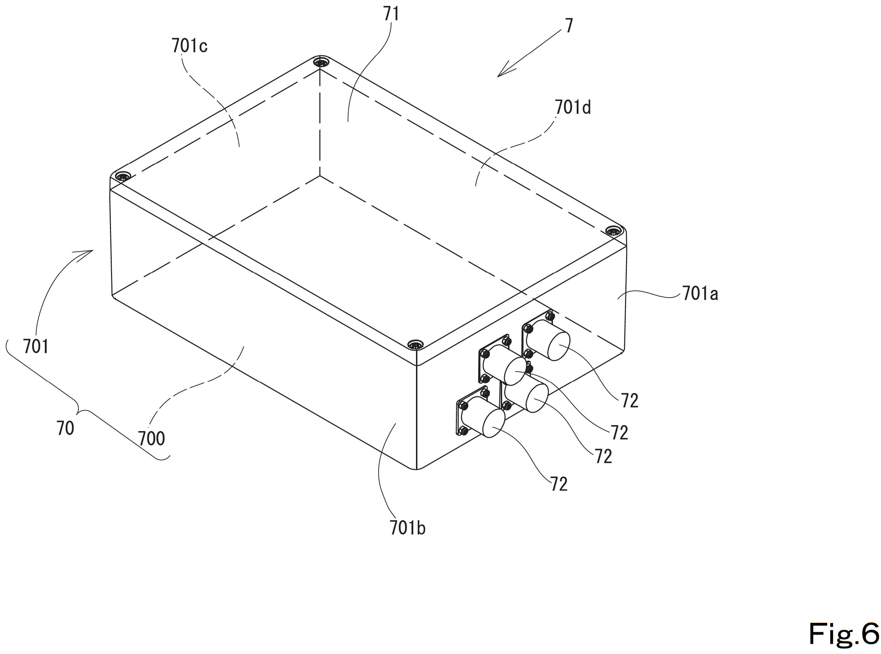

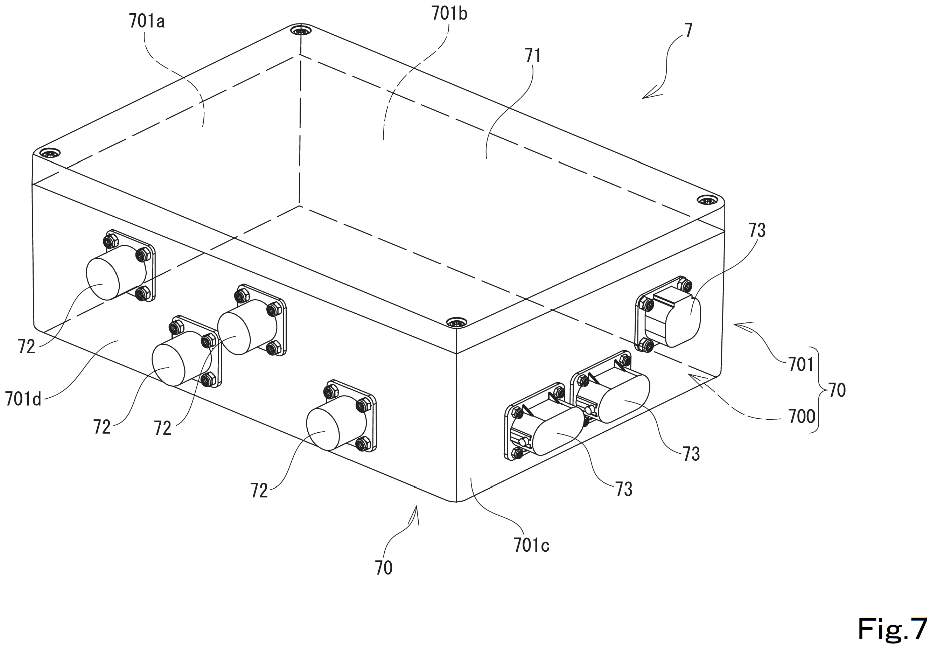

The junction box 7 is to house a substrate 65 (see FIG. 8) included in part of the electric circuit 6. More specifically, as illustrated in FIGS. 6 and 7, the junction box 7 includes a box body 70 and a lid body 71. The box body 70 is to house the electric circuit 6 (substrate 65) and includes an upper opening. The lid body 71 is to close the upper opening of the box body 70.

The box body 70 includes a bottom plate 700 and a perimeter wall portion 701 which rises from perimeter edge portions of the bottom plate 700. According to the present example embodiment, the bottom plate 700 is in a quadrangular shape (rectangular shape) in plan view. Thus, the perimeter wall portion 701 includes four rising walls 701a, 701b, 701c, and 701d rising from the four respective sides included in the contour of the bottom plate 700. When the four rising walls 701a, 701b, 701c, and 701d continue, the perimeter wall portion 701 is in a rectangular annular shape.

Wire introduction openings 72 to introduce wires (not illustrated) and connectors 73 to connect wires and signal lines SL are attached to predetermined rising walls 701a, 701c, and 701d out of the four rising walls 701a, 701b, 701c, and 701d included in the perimeter wall portion 701. Locations of the wire introduction openings 72 and the connectors 73 are determined in accordance with a circuit configuration of the electric circuit 6 (substrate 65) housed in the box body 70.

As described above, the perimeter wall portion 701 rises from the perimeter edge portion of the bottom plate 700. Thus, an upper end of the perimeter wall portion 701 defines the upper opening communicating with the inside and the outside of (open to the outside of) the perimeter wall portion 701. Along with this, the lid body 71 is provided to close the upper opening of the box body 70.

Here, the electric circuit 6 is specifically described. As illustrated in FIGS. 8 and 9, the electric circuit 6 includes a first electric path 60 leading to the electric device IV and provided with a first relay 600 to open and close to break and make the first electric path 60, a second electric path 61 leading to the charging port CP and provided with a second relay 610 to open and close to break and make the second electric path 61, and a third electric path 62 leading to the batteries B1 and B2 and provided with a protective fuse 620. The electric working machine 1 according to the present example embodiment includes a controller 8 configured or programmed to control opening and closing of the first relay 600 and the second relay 610.

The first electric path 60 and the second electric path 61 join each other. Along with this, the third electric path 62 is connected to a junction point JP of the first electric path 60 and the second electric path 61.

The electric circuit 6 (electric working machine 1) is configured to be switched between the charging state and the electric power supplying state by combining opening or closing of the first relay 600 and opening or closing of the second relay 610. That is, the controller 8 is configured or programmed to control the opening and closing of the first relay 600 and the second relay 610 to switch the electric circuit 6 between the charging state and the electric power supplying state.

The electric circuit 6 is configured such that, in the charging state, the first relay 600 is in an open state and the second relay 610 is in a closed state. In contrast, the electric circuit 6 is configured such that, in the electric power supplying state, the second relay 610 is in the open state and the first relay 600 is in the closed state. That is, the controller 8 is configured or programmed to cause the first relay 600 to be in the open state and the second relay 610 to be in the closed state so as to cause the electric circuit 6 to be in the charging state. The controller 8 is configured or programmed to cause the second relay 610 to be in the open state and the first relay 600 to be in the closed state so as to cause the electric circuit 6 to be in the electric power supplying state. According to the present example embodiment, the controller 8 is configured or programmed to prohibit the electric circuit 6 from being in the charging state and the electric power supplying state simultaneously by combining opening or closing of the first relay 600 and opening or closing of the second relay 610.

The electric circuit 6 is configured such that a rated current value of the first electric path 60 and a rated current value of the second electric path 61 during energization are equal to or substantially equal to each other.

Specifically, as illustrated in FIG. 8, the first electric path 60, the second electric path 61, and the third electric path 62 include electric conductors 601, 611, 630, 640, and 650 to conduct electricity. The cross-sectional area of the electric conductor 601 of the first electric path 60 and the cross-sectional area of the electric conductor 611 of the second electric path 61 are defined such that the rated current value of the first electric path 60 and the rated current value of the second electric path 61 during energization are equal to or substantially equal to each other. Also according to the present example embodiment, the cross-sectional areas of the electric conductors 640 and 650 of the third electric path 62 are defined such that the cross-sectional areas of the electric conductors 640 and 650 are equal to or substantially equal to the cross-sectional area of the electric conductor 601 of the first electric path 60 and the cross-sectional area of the electric conductor 611 of the second electric path 61 so that the rated current value of the third electric path 62 and the rated current value of the first electric path 60 and the second electric path 61 are equal to or substantially equal to each other.

According to the present example embodiment, the electric conductors 601, 611, 630, 640, and 650 of the first electric path 60, the second electric path 61, and the third electric path 62 are bus bars in a piece shape (plate shape). That is, each of the electric conductors 601, 611, 630, 640, and 650 of the first electric path 60, the second electric path 61, and the third electric path 62 is a bus bar in a piece shape (rectangular plate shape). Each of the bus bars 601, 611, 630, 640, and 650 includes screw insertion holes (not numbered) penetrating therethrough at both end portions in the longitudinal direction to allow screws (bolts) to be inserted therethrough.

Specifically described, the first electric path 60 includes the first relay 600 and a first bus bar 601 which is the electric conductor 601 to couple the first relay 600 and the electric device IV. The second electric path 61 includes the second relay 610 and a second bus bar 611 which is the electric conductor 611 to couple the second relay 610 and the charging port CP. At least one of the first electric path 60 or the second electric path 61 includes the third bus bar 630 to be connected to the other of the first electric path 60 or the second electric path 61. The third bus bar 630 includes, as the junction point JP, a connection point to be connected to the other of the first electric path 60 or the second electric path 61.

Although the details will be described later, the third bus bar 630 is included in the first electric path 60 according to the present example embodiment. The third electric path 62 includes the protective fuse 620 and the fourth bus bar 640 to be connected to the protective fuse 620. That is, the third electric path 62 includes the fourth bus bar 640 to be connected to one of terminals of the protective fuse 620. According to the present example embodiment, the third electric path 62 further includes the fifth bus bar 650 to be connected to the protective fuse 620. That is, the third electric path 62 includes the fifth bus bar 650 to be connected to the other terminal of the protective fuse 620.

The cross-sectional area of the first bus bar 601 and the cross-sectional area of the second bus bar 611 are defined to be equal to or substantially equal to each other. The cross-sectional area of the third bus bar 630 is defined to be equal to or substantially equal to the cross-sectional area of the first bus bar 601 and the cross-sectional area of the second bus bar 611. The cross-sectional area of the fourth bus bar 640 is defined to be equal to or substantially equal to the cross-sectional area of the first bus bar 601 and the cross-sectional area of the second bus bar 611. The cross-sectional area of the fifth bus bar 650 is defined to be equal to or substantially equal to the cross-sectional area of the first bus bar 601 and the cross-sectional area of the second bus bar 611.

According to the present example embodiment, the first relay 600, the second relay 610, the first bus bar 601, the second bus bar 611, the third bus bar 630, and the fourth bus bar 640 are located on the substrate 65. Along with this, the first electric path 60, the second electric path 61, and the third electric path 62 include wires L1a, L1b, L2a, L2b, L3a, and L3b connected to the bus bars 601, 611, 630, and 640 (the first bus bar 601, the second bus bar 611, and the fourth bus bar 640), and each of the wires L1a, L1b, L2a, L2b, L3a, and L3b is routed and connected to a corresponding device (the electric device IV, the charging port CP, or the battery B1 or B2).

More specific description is as follows. As illustrated in FIG. 9, the first relay 600 and the second relay 610 are of an electromagnetic type respectively including contacts 600a and 610a and electromagnetic coils 600b and 610b to open and close the contacts 600a and 610a. The signal lines SL leading to the controller 8 are connected to the first relay 600 and the second relay 610 (electromagnetic coils 600b and 610b).

In this way, the first relay 600 and the second relay 610 receive electric signals (electric power) transmitted from the controller 8 via the signal lines SL, and the electromagnetic coils 600b and 610b are actuated to perform the opening and closing in accordance with the received signal. The first relay 600 and the second relay 610 may be a contact relay or a contactless relay. The first relay 600 and the second relay 610 may include normally open contacts or normally closed contacts as long as the first relay 600 and the second relay 610 can perform the opening and closing in accordance with instructions from the controller 8.

Referring back to FIG. 8, the first relay 600 includes input/output terminals 600Ta and 600Tb, and the second relay 610 includes input/output terminals 610Ta and 610Tb. That is, the first relay 600 includes the first terminal 600Ta as an upstream terminal to supply electric power to the electric device IV and the second terminal 600Tb as a downstream terminal to supply electric power to the electric device IV. The second relay 610 includes the first terminal 610Ta as an upstream terminal to be supplied with electric power from the charging port CP and the second terminal 610Tb as a downstream terminal to be supplied with electric power from the charging port CP.

In the first relay 600 and the second relay 610, the first terminals 600Ta and 610Ta and the second terminals 600Tb and 610Tb are bolt terminals and, when nuts N are screwed thereonto, are mechanically and electrically connected to the target electric conductors 601, 611, 630, and 640 (first bus bar 601, the second bus bar 611, the third bus bar 630, and the fourth bus bar 640). In the description below, coupling of the electric conductors 601, 611, 630, 640, 650 and the like by screwing a nut N onto a bolt or a bolt terminal is referred to as screw fastening.

More specifically described, one end portion of the first bus bar 601 is screw-fastened to the second terminal 600Tb of the first relay 600, and the other end portion of the first bus bar 601 is screw-fastened to a terminal connected to an end portion of the wire L1a introduced from a wire introduction opening 72 and leading to the inverter IV as the electric device IV. One end portion of the second bus bar 611 is screw-fastened to the first terminal 610Ta of the second relay 610, and the other end portion of the second bus bar 611 is screw-fastened to a terminal connected to an end portion of the wire L2a introduced from a wire introduction opening 72 and leading to the charging port CP. One end portion of the third bus bar 630 is screw-fastened to the first terminal 600Ta of the first relay 600, and the other end portion of the third bus bar 630 is screw-fastened to the second terminal 610Tb of the second relay 610. According to the present example embodiment, one end portion of the fourth bus bar 640 is screw-fastened to, together with the other end portion of the third bus bar 630, the second terminal 610Tb of the second relay 610, and the other end portion of the fourth bus bar 640 is screw-fastened to one of the terminals of the protective fuse 620.

As described above, the third bus bar 630, which is located so as to extend between the first relay 600 and the second relay 610, appears to be included in the second electric path 61. However, as described above, the one end portion of the fourth bus bar 640 is screw-fastened to, together with the other end portion of the third bus bar 630, the second terminal 610Tb of the second relay 610. Thus, according to the present example embodiment, the second terminal 610Tb of the second relay 610 is the junction point JP of the first electric path 60 and the second electric path 61. That is, the third bus bar 630 includes the junction point JP at the other end portion.

One end portion of the fifth bus bar 650 is screw-fastened to the other terminal of the protective fuse 620. Furthermore, terminals connected to end portions of the wires L3a and L4a leading to the batteries B1 and B2 and introduced from wire introduction openings 72 are screw-fastened to the fifth bus bar 650. Two batteries B1 and B2 are included in the electric working machine 1 according to the present example embodiment. Thus, two wires L3a and L4a leading to the batteries B1 and B2 are introduced from the respectively provided wire introduction openings 72 into the junction box 7, and the terminals connected to the end portions of the wires L3a and L4a are screw-fastened to the fifth bus bar 650. Thus, two batteries B1 and B2 are connected in parallel to the electric circuit 6.

According to the present example embodiment, a connector is attached to an end portion of the signal line SL1 leading to the controller 8. When connected to a corresponding one of the connectors 73, the signal line SL1 leads to the signal line SL on the substrate 65 and is electrically connected to the first relay 600 and the second relay 610. That is, a circuit for signals including the signal line SL electrically connecting the connector 73 connected to the controller 8 (connector) to the first relay 600 and the second relay 610 is mounted on the substrate 65. Furthermore, on the substrate 65, on which the above-described electric circuit 6 is mounted, the other electric circuit to perform, for example, electric power supply to the other device is mounted. Along with this, as described above, the connector 73 to be connected to a signal line SL2 leading to the other device and the connector 73 connected to an electric power line SL3 are connected to the other electric circuit on the substrate 65. These connectors 73 are fixed to the junction box 7 (box body 70).

Each of the batteries B1 and B2 is a direct-current power source and includes a positive terminal and a negative terminal. Thus, the first electric path 60, the second electric path 61, and the third electric path 62 respectively include positive electric paths 60a, 61a, and 62a each electrically leading to the positive terminal of the battery B1 or B2 and negative electric paths 60b, 61b, and 62b each leading to the negative terminal of the battery B1 or B2.

In the electric circuit 6 according to the present example embodiment, only the positive electric paths 60a, 61a, and 62a include the above-described configuration. That is, the relays 600 and 610 (the first relay 600 and the second relay 610) are located in the first electric path 60, the second electric path 61, and the positive electric paths 60a and 61a of the third electric path 62 (the electric paths 60a and 61a respectively leading to the positive terminal of the inverter IV as the electric device IV and the positive terminal of the charging port CP), and the protective fuse 620 is located in the positive electric path 62a of the third electric path 62 (the electric path 62a leading to the positive terminals of the batteries B1 and B2). Thus, the electric paths described above as the first electric path 60, the second electric path 61, and the third electric path 62 are the positive electric paths 60a, 61a, and 62a. That is, in the above description of the electric circuit 6, the first electric path 60, the second electric path 61, and the third electric path 62 can be read as the positive electric paths 60a, 61a, and 62a of the first electric path 60, the second electric path 61, and the third electric path 62.

In contrast, the negative electric paths 60b, 61b, and 62b of the first electric path 60, the second electric path 61, and the third electric path 62 in the electric circuit 6 are connected only by electric conductors 660 and 670 (bus bars 660 and 670). According to the present example embodiment, each of the wires L1b, L2b, L3b, and L4b included in the negative electric paths 60b, 61b, and 62b and introduced from the wire introduction openings 72 are connected to each other via the bus bars 660 and 670.

Specifically, the electric circuit 6 includes a sixth bus bar 660 and a seventh bus bar 670. The sixth bus bar 660 connects a terminal attached to an end portion of the wire L1b, which leads to a negative terminal of the inverter IV as the electric device IV, is included in the negative electric path 60b of the first electric path 60, and introduced from the wire introduction opening 72, to a terminal attached to an end portion of the wire L2b, which leads to the negative terminal of the charging port CP, is included in the negative electric path 61b of the second electric path 61, and introduced from the wire introduction opening 72. The seventh bus bar 670 is connected to the sixth bus bar 660. Terminals attached to end portions of the wires L3b and L4b, which lead to the negative terminals of the batteries B1 and B2, are introduced from the wire introduction openings 72, and included in the negative electric paths 62b of the third electric path 62 are connected to the seventh bus bar 670.

According to the present example embodiment, one end portion of the sixth bus bar 660 is screw-fastened to a terminal of the wire L1b leading to the negative terminal of the inverter IV. The other end portion of the sixth bus bar 660 is screw-fastened to a terminal of the wire L2b leading to the negative terminal of the charging port CP. One end portion of the seventh bus bar 670 is screw-fastened to, together with the other end portion of the sixth bus bar 660, the terminal of the wire L2b leading to the negative terminal of the charging port CP. Each of the terminals connected to the end portions of two wires including the wires L3b and L4b leading to two batteries B1 and B2 is screw-fastened to the seventh bus bar 670.

According to the present example embodiment, the positive electric paths 60a, 61a, and 62a of the first electric path 60, the second electric path 61, and the third electric path 62 are located on a side of the substrate 65 where one of the surfaces of the substrate 65 is present, and the negative electric paths 60b, 61b, and 62b of the first electric path 60, the second electric path 61, and the third electric path 62 are located on the other side of the substrate 65 where the other surface of the substrate 65 is present. That is, in the electric circuit 6 according to the present example embodiment, the first relay 600, the second relay 610, the protective fuse 620, the first bus bar 601, the second bus bar 611, the third bus bar 630, the fourth bus bar 640, and the fifth bus bar 650 are located on the side of the substrate 65 where the one of the surfaces of the substrate 65 is present, and the sixth bus bar 660 and the seventh bus bar 670 are located on the other side of the substrate 65 where the other surface of the substrate 65 is present. This is to provide insulation between the positive side and the negative side by using the electrically insulated substrate 65.

The electric circuit 6 (substrate 65) is located in the junction box 7. As illustrated in FIGS. 4 and 5, the electric circuit 6 (substrate 65) is located in the rear machine room M1. That is, the junction box 7 is located in the rear machine room M1. More specifically, the junction box 7 is located higher than the batteries B1 and B2 located in the rear machine room M1.

The electric working machine 1 according to the present example embodiment is as described above. When the opening and closing of the first relay 600 and the opening and closing of the second relay 610 are reversed by the controller 8, the charging state and the electric power supplying state are switched. In the charging state, the first relay 600 of the first electric path 60 is opened and the second relay 610 of the second electric path 61 is closed. Thus, only the charging port CP is electrically coupled to the batteries B1 and B2.

The protective fuse 620 is located in the third electric path 62 connecting the charging port CP to the batteries B1 and B2. Thus, when an overcurrent flows during charging, the protective fuse 620 is blown (melts) to disconnect the electric path connecting the charging port CP and the batteries B1 and B2. This suppresses excessive supply of electric power from a charging station (charging port CP) to the batteries B1 and B2 (occurrence of the overcurrent) or flowing to an incorrect electric path. Furthermore, even when the overcurrent occurs in the second electric path 61 due to an anomaly in the batteries B1 and B2 (backflow of electricity and the like), the protective fuse 620 is blown (melts) to disconnect the electric path connecting the charging port CP and the batteries B1 and B2. Thus, the charging station (charger) is protected.

In contrast, in the electric power supplying state, the first relay 600 of the first electric path 60 is closed and the second relay 610 of the second electric path 61 is opened. Thus, only the electric device IV (inverter IV) is electrically connected to the batteries B1 and B2. The third electric path 62 including the protective fuse 620 is present in the electric path connecting the electric device IV (inverter IV) and the batteries B1 and B2. Thus, when overcurrent flows due to a trouble of the electric device IV (inverter IV) or the electric motor EM connected to the electric device IV, the protective fuse 620 is blown (melts) to disconnect the electric path connecting the electric device IV (inverter IV) and the batteries B1 and B2. Thus, supply of electric power from the batteries B1 and B2 is stopped. Accordingly, flow of overcurrent to an incorrect electric path is suppressed and an adverse effect of the overcurrent on the electric device IV (inverter IV) and the electric motor EM leading to the electric device IV is suppressed.

As described above, the electric working machine 1 according to the present example embodiment can provide protection for the electric device IV even with a single protective fuse 620. Furthermore, since the number of protective fuses 620 is one, that is, the fewest, the space occupancy rate of the fuse can be reduced. Thus, size reduction of the electric circuit 6 can be achieved, and the effect on the arrangement of other devices is reduced. In particular, the size of the junction box 7 housing the electric circuit 6 can be reduced. This can improve the degree of flexibility in, for example, arranging devices so as to allow effective use of space.

The present invention is not limited to the above-described example embodiment and can be appropriately changed without departing from the gist of the present invention.

According to the above-described example embodiment, the configurations differ between the positive electric paths 60a, 61a, and 62a and the negative electric paths 60b, 61b, and 62b of the first electric path 60, the second electric path 61, and the third electric path 62. However, this is not limiting. For example, the configurations of the positive electric paths 60a, 61a, and 62a and the configurations of the negative electric paths 60b, 61b, and 62b of the first electric path 60, the second electric path 61, and the third electric path 62 described in the example embodiment may be interchanged. The configurations of the negative electric paths 60b, 61b, and 62b of the first electric path 60, the second electric path 61, and the third electric path 62 may be the same as the configurations of the positive electric paths 60a, 61a, and 62a of the above-described example embodiment. That is, the positive electric paths 60a, 61a, and 62a and the negative electric paths 60b, 61b, and 62b of the first electric path 60, the second electric path 61, and the third electric path 62 may include the first relay 600, the second relay 610, the protective fuse 620, the first bus bar 601, the second bus bar 611, the third bus bar 630, the fourth bus bar 640, and the fifth bus bar 650.

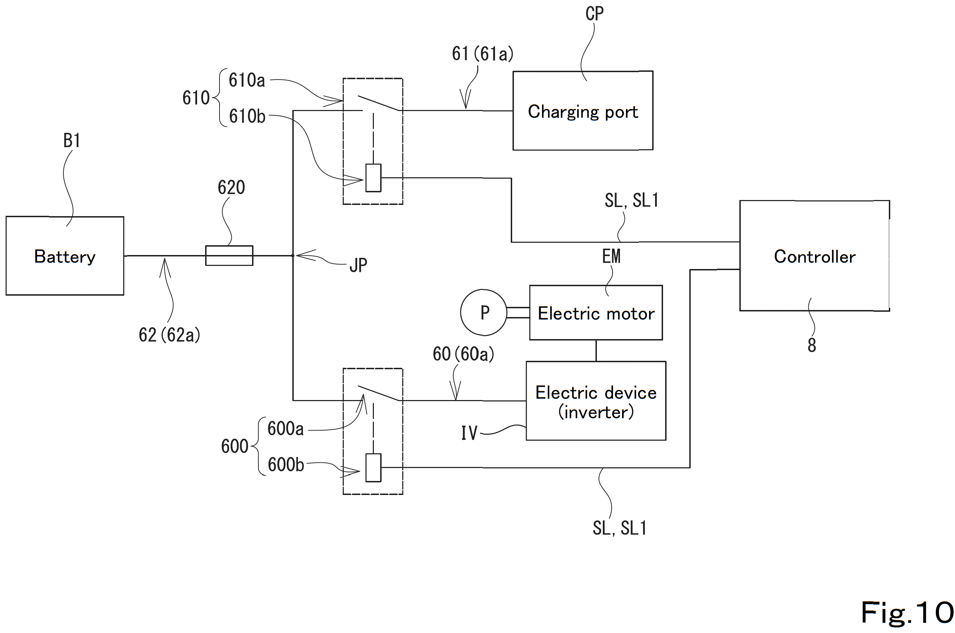

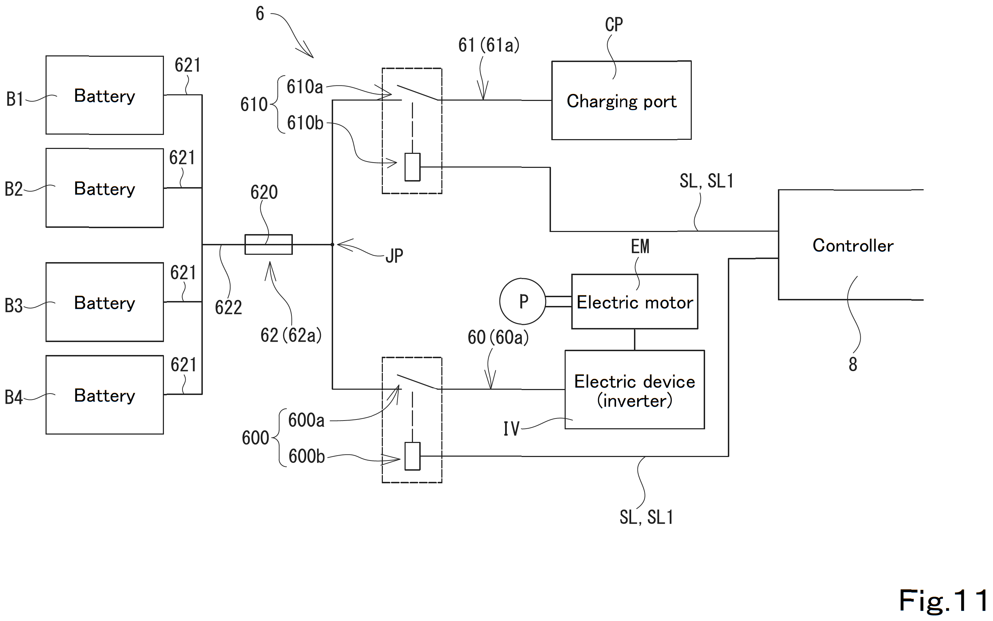

According to the above-described example embodiment, the electric working machine 1 includes two batteries B1 and B2. However, this is not limiting. For example, as illustrated in FIG. 10, the electric working machine 1 may include a single battery B1. As illustrated in FIG. 11, the electric working machine 1 may include three or more (four in FIG. 11) batteries B1. In either case, it is only necessary to connect the third electric path 62 to the junction point JP of the first electric path 60 and the second electric path 61. As illustrated in FIG. 11, when two or more batteries B1 and the like are provided, the third electric path 62 includes a plurality of branched electric paths 621 and the like leading to the batteries B1 and the like and a single merged electric path 622 formed by merging the plurality of branched electric paths 621 and the like. The protective fuse 620 is provided in the merged electric path 622. Also in this way, in either the charging state or the electric power supplying state, electricity flows through the merged electric path 622. Thus, with the protective fuse 620 provided in the merged electric path 622, the protective fuse 620 melts when overcurrent occurs, and devices leading to the electric path can be protected.

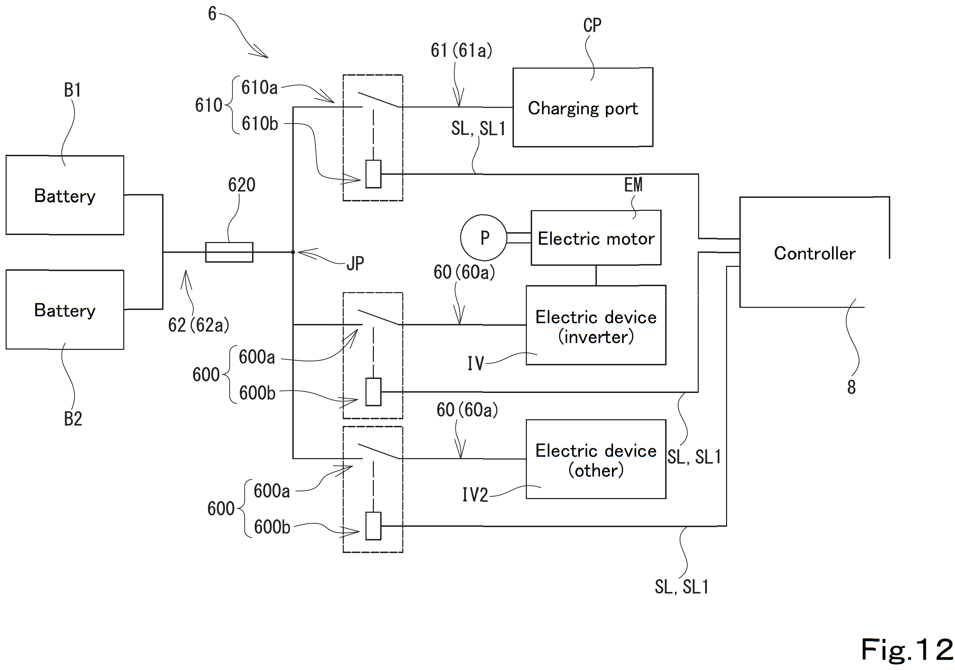

According to the above-described example embodiment, the electric circuit 6 including a single first electric path 60 and a single second electric path 61 has been described. However, this is not limiting. For example, as illustrated in FIG. 12, when the electric working machine 1 includes a plurality of different electric devices IV and IV2, a plurality of first electric paths 60 may be provided. In this case, the third electric path 62 is connected to the junction point JP where an electric path into which the plurality of first electric paths 60 merge and the second electric path 61 merges. Also in this case, the controller 8 is configured or programmed to control the state of the opening and closing of the plurality of first relays 600. To switch between the electric power supplying state and the charging state, the controller 8 is configured or programmed to instruct so as not to allow the opening and closing of the second relay 610 to coincide with those of the first relays 600 (so as to cause the second relay 610 and the first relays 600 to perform opposite operations).

In this case, in the electric power supplying state, the plurality of different electric devices IV and IV2 operate simultaneously or at different times. When overcurrent flows due to occurrence of anomaly in either the electric device IV or IV2, the protective fuse 620 in the third electric path 62 melts. Thus, supply of electric power from the batteries B1 and B2 to both the electric devices IV and IV2 is stopped. In this way, no overcurrent flows into both the electric devices IV and IV2, and the plurality of electric devices IV and IV2 are protected. In the charging state, the first relay 600 is opened. Thus, even when overcurrent flows through the electric paths due to an anomaly occurring in the batteries B1 and B2 or in the charging station leading to the charging port CP, no overcurrent flows into both the electric devices IV and IV2.

Furthermore, when overcurrent flows during charging of the batteries B1 and B2, the protective fuse 620 is blown (melts) to disconnect the electric path connecting the charging port CP and the batteries B1 and B2. This suppresses, when an anomaly occurs in the batteries B1 and B2, flow of overcurrent into a different electric path and influence on the charging port CP and the charging station (charger) connected to the charging port CP due to supply of output (backflow or the like) from the batteries B1 and B2. When an anomaly occurs in the charging station (charger), supply of electric power to the batteries B1 and B2 is stopped. Thus, the batteries B1 and B2 are protected.

According to the above-described example embodiment, the third bus bar 630 is included in the first electric path 60, the other end portion of the third bus bar 630 is connected to the second terminal 610Tb of the second relay 610 of the second electric path 61, and the fourth bus bar 640 is connected to the second terminal 610Tb of the second relay 610. In this way, the other end portion of the third bus bar 630 is the junction point JP of the first electric path 60 and the second electric path 61. However, this is not limiting.

For example, the third bus bar 630 may be included in the second electric path 61, the one end portion of the third bus bar 630 may be connected to the first terminal 600Ta of the first relay 600 of the first electric path 60, the other end portion of the third bus bar 630 may be connected to the second terminal 610Tb of the second relay 610 of the second electric path 61, and further, the fourth bus bar 640 may be connected to the first terminal 600Ta of the first relay 600. In this way, the other end portion of the third bus bar 630 may be the junction point JP of the first electric path 60 and the second electric path 61.

The third bus bar 630 may be included in each of the first electric path 60 and the second electric path 61. In this case, the one end portion of the third bus bar 630 of the first electric path 60 is connected to the first terminal 600Ta of the first relay 600, and the one end portion of the third bus bar 630 of the second electric path 61 is connected to the second terminal 610Tb of the second relay 610. In addition, corresponding to connection (screw-fastening) of the other end portion of the third bus bar 630 of the first electric path 60 and the other end portion of the third bus bar 630 of the second electric path 61 to each other, by screw-fastening the fourth bus bar 640 together with the other end portion of the third bus bar 630 of the first electric path 60 and the other end portion of the third bus bar 630 of the second electric path 61, the other end portion of the third bus bar 630 of the first electric path 60 and the other end portion of the third bus bar 630 of the second electric path 61 may be the junction point JP (junction point JP of the first electric path 60 and the second electric path 61) to which the fourth bus bar 640 is connected.

In this case, the third bus bar 630 of the first electric path 60, the third bus bar 630 of the second electric path 61, and the fourth bus bar 640 may be arranged in a T shape or a Y shape in plan view. A single third bus bar 630 may include a portion of the first electric path 60 and a portion of the second electric path 61. That is, a single third bus bar 630 may be used in both the first electric path 60 and the second electric path 61. In this case, the one end portion of the third bus bar 630 may be connected to the first terminal 600Ta of the first relay 600, the other end portion of the third bus bar 630 may be connected to the second terminal 610Tb of the second relay 610, the fourth bus bar 640 may be connected to an intermediate position of the third bus bar 630 (any position between the one end portion and the other end portion), and the connection point of the fourth bus bar 640 may be the junction point JP of the first electric path 60 and the second electric path 61.

According to the above-described example embodiment, electric connection is established by introducing each of the wires L1a and L1b of the first electric path 60, the wires L2a and L2b of the second electric path 61, and the wires L3a, L3b, L4a, and L4b of the third electric path 62 into the junction box 7 from a corresponding one of the wire introduction openings 72, and screw-fastening the terminal attached to the end portion of each of the wires L1a, L1b, L2a, L2b, L3a, L3b, L4a, and L4b to the corresponding bus bar 601, 611, 660, or 670 (the first bus bar 601, the second bus bar 611, the sixth bus bar 660, or the seventh bus bar 670). However, this is not limiting.

For example, each of the wires L1a, L1b, L2a, L2b, L3a, L3b, L4a, and L4b may be electrically connected to the corresponding bus bar 601, 611, 660, or 670 (the first bus bar 601, the second bus bar 611, the sixth bus bar 660, or the seventh bus bar 670) by attaching a first connector electrically connected to the bus bars 601, 611, 660, and 670 (the first bus bar 601, the second bus bar 611, the sixth bus bar 660, and the seventh bus bar 670) to the outer surface of the junction box 7, connecting a second connector to be connected (for example, to be fitted) to the first connector to the end portion of each of the wires L1a, L1b, L2a, L2b, L3a, L3b, L4a, and L4b, and connecting (fitting) the first connector and the second connector to each other.

In this case, since the first connector and the second connector are able to be fitted and removed (attachable and detachable), electric connection and disconnection of each of the wires L1a, L1b, L2a, L2b, L3a, L3b, L4a, and L4b to and from the corresponding bus bar 601, 611, 660, or 670 (the first bus bar 601, the second bus bar 611, the sixth bus bar 660, or the seventh bus bar 670) are easily performed. Thus, in case of failure or the like of the electric circuit 6 (substrate 65), the attachment and detachment (replacement or the like) of the junction box 7 (box body 70) can be easily performed.

Example embodiments have been described as above, and (example embodiments of) the present invention provide electric working machines 1 described in the following items.

(Item 1) An electric working machine 1 including a battery B1, B2 which is chargeable and dischargeable, an electric device IV to be supplied with electric power from the battery B1, B2, a charging port CP to be connected to an electric power source, and an electric circuit 6 to switch between an electric power supplying state in which the battery B1, B2 and the electric device IV are electrically connected to each other and a charging state in which the battery B1, B2 and the charging port CP are electrically connected to each other, wherein the electric circuit 6 includes a first electric path 60 leading to the electric device IV and provided with a first relay 600 to open and close to break and make the first electric path 60, a second electric path 61 leading to the charging port CP and provided with a second relay 610 to open and close to break and make the second electric path 61, and a third electric path 62 leading to the battery B1, B2 and provided with a protective fuse 620, the first electric path 60 and the second electric path 61 join each other, and the third electric path 62 is connected to a junction point JP of the first electric path 60 and the second electric path 61, and the electric circuit 6 is configured to be switched between the charging state and the electric power supplying state by combining opening or closing of the first relay 600 and opening or closing of the second relay 610.

With the electric working machine 1 according to item 1, electricity flows through the third electric path 62 in both the charging state and the electric power supplying state. Thus, when overcurrent occurs due to the charging port CP, the electric device IV, or the battery B1 or B2, the protective fuse 620 in the third electric path 62 breaks (for example, melts). Thus, the charging port CP, the electric device IV, etc. are electrically disconnected from the battery(batteries) B1, B2.

Thus, even with a single protective fuse 620, the charging port CP, the electric device IV, and the batteries B1 and B2 can be protected. Furthermore, since devices can be protected without requiring a plurality of protective fuses 620 (with a single protective fuse 620), the space occupancy rate of the protective fuse 620 is reduced. Thus, size reduction of the electric circuit 6 can be achieved, and the influence on the arrangement of other devices is reduced. In particular, the size of the junction box 7 housing the electric circuit 6 can be reduced. This can improve the degree of flexibility in, for example, arranging devices so as to allow effective use of space.

(Item 2) The electric working machine 1 according to item 1, wherein the electric circuit 6 is configured such that, in the charging state, the first relay 600 is in an open state and the second relay 610 is in a closed state, and the electric circuit 6 is configured such that, in the electric power supplying state, the second relay 610 is in the open state and the first relay 600 is in the closed state.

With the electric working machine 1 according to item 2, it is possible to reliably prevent the charging state and the electric power supplying state from being concurrently performed, by combining opening or closing of the first relay 600 and opening or closing of the second relay 610.

(Item 3) The electric working machine 1 according to item 1 or 2, wherein the electric circuit 6 is configured such that a rated current value of the first electric path 60 and a rated current value of the second electric path 61 during energization are equal to or substantially equal to each other.

With the electric working machine 1 according to item 3, no imbalance in current value occurs between the first electric path 60 and the second electric path 61, and accordingly, the protective fuse 620 in the third electric path 62 can function appropriately.

(Item 4) The electric working machine 1 according to item 3, wherein the first electric path 60 and the second electric path 61 each include an electric conductor 601, 611 to conduct electricity, and a cross-sectional area of the electric conductor 601 of the first electric path 60 and a cross-sectional area of the electric conductor 611 of the second electric path 61 are defined such that the rated current value of the first electric path 60 and the rated current value of the second electric path 61 during energization are equal to or substantially equal to each other.

With the electric working machine 1 according to item 4, no imbalance in current value occurs between the first electric path 60 and the second electric path 61, and accordingly, the protective fuse 620 in the third electric path 62 can function appropriately. In particular, the cross-sectional area of the electric conductor 601 of the first electric path 60 and the cross-sectional area of the electric conductor 611 of the second electric path 61 are defined such that the rated current value of the first electric path 60 during energization and the rated current value of the second electric path 61 during energization are equal to or substantially equal to each other. Thus, the electric circuit 6 is not complicated.

(Item 5) The electric working machine 1 according to item 4, wherein the first electric path 60 includes the first relay 600 and a first bus bar 601 which is the electric conductor 601 to couple the first relay 600 and the electric device IV, the second electric path 61 includes the second relay 610 and a second bus bar 611 which is the electric conductor 611 to couple the second relay 610 and the charging port CP, and a cross-sectional area of the first bus bar 601 and a cross-sectional area of the second bus bar 611 are defined to be equal to or substantially equal to each other.

With the electric working machine 1 according to item 5, the charging state and the electric power supplying state can be switched by switching the opening and closing of the first relay 600 and the second relay 610. Furthermore, since the cross-sectional area of the first bus bar 601 and the cross-sectional area of the second bus bar 611 are defined to be equal to or substantially equal to each other, no imbalance in current value occurs between the first electric path 60 and the second electric path 61. Thus, the protective fuse 620 in the third electric path 62 can function appropriately.

(Item 6) The electric working machine 1 according to item 5, wherein at least one of the first electric path 60 or the second electric path 61 includes a third bus bar 630 to be connected to the other of the first electric path 60 or the second electric path 61, the third bus bar 630 including, as the junction point JP, a connection point to be connected to the other of the first electric path 60 or the second electric path 61.

With the electric working machine 1 according to item 6, the connection point of the third electric path 62 including the protective fuse 620 is a position where the balance is achieved with respect to the first electric path 60 and the second electric path 61.

(Item 7) The electric working machine 1 according to item 5 or 6, wherein the third electric path 62 includes the protective fuse 620 and a fourth bus bar 640 to be connected to the protective fuse 620, and a cross-sectional area of the fourth bus bar 640 is defined to be equal to or substantially equal to the cross-sectional area of the first bus bar 601 and the cross-sectional area of the second bus bar 611.

With the electric working machine 1 according to item 7, since the cross-sectional area of the fourth bus bar 640 to be connected to the protective fuse 620 is defined to be equal to or substantially equal to the cross-sectional area of the first bus bar 601 and the cross-sectional area of the second bus bar 611, variation in resistance and the like of the third electric path 62 can be reduced. Thus, the balance is achieved during energization in the first electric path 60 and during energization in the second electric path 61.

(Item 8) The electric working machine 1 according to any one of items 1 to 7, wherein the battery B1, B2 includes a plurality of the batteries B1, B2, and the third electric path 62 leads to the plurality of batteries B1, B2, to the first electric path 60, and to the second electric path 61.

With the electric working machine 1 according to item 8, a plurality of batteries B1 and B2 are included. Thus, a large amount of electric power can be supplied. In addition, as described above, the batteries B1 and B2, the electric device IV, and the charging port CP can be protected.

(Item 9) The electric working machine 1 according to any one of items 1 to 8, further including a controller 8 configured or programmed to control the opening and closing of the first relay 600 and of the second relay 610.

With the electric working machine 1 according to item 9, the controller 8 is configured or programmed to control the opening and closing of the first relay 600 and of the second relay 610. Thus, the electric paths are switched appropriately and quickly.

(Item 10) The electric working machine 1 according to any one of items 1 to 7, further including a traveling device 2 to travel, a working device 3 to perform predetermined work, a hydraulic system HS including a hydraulic pump P and configured to actuate the traveling device 2 and the working device 3 by hydraulic fluid delivered by the hydraulic pump P, and an electric motor EM to drive the hydraulic pump P, wherein the electric device IV is an inverter IV to control drive of the electric motor EM.

With the electric working machine 1 according to item 10, the electric motor EM is controlled by the inverter IV. Thus, the control of the hydraulic pump P (hydraulic system HS) can be performed with high accuracy.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An electric working machine (1) comprising:
a battery (B1, B2) which is chargeable and dischargeable;
an electric device (IV) to be supplied with electric power from the battery (B1, B2);
a charging port (CP) to be connected to an electric power source;
and
an electric circuit (6) to switch between an electric power supplying state in which the battery (B1, B2) and the electric device (IV) are electrically connected to each other and a charging state in which the battery (B1, B2) and the charging port (CP) are electrically connected to each other; wherein
the electric circuit (6) includes:
a first electric path (60) leading to the electric device (IV) and provided with a first relay (600) to open and close to break and make the first electric path (60);
a second electric path (61) leading to the charging port (CP) and provided with a second relay (610) to open and close to break and make the second electric path (61); and
a third electric path (62) leading to the battery (B1, B2) and provided with a protective fuse (620);
the first electric path (60) and the second electric path (61) join each other, and the third electric path (62) is connected to a junction point (JP) of the first electric path (60) and the second electric path (61); and
the electric circuit (6) is configured to be switched between the charging state and the electric power supplying state by combining opening or closing of the first relay (600) and opening or closing of the second relay (610).

2. The electric working machine (1) according to claim 1, wherein
the electric circuit (6) is configured such that, in the charging state, the first relay (600) is in an open state and the second relay (610) is in a closed state; and
the electric circuit (6) is configured such that, in the electric power supplying state, the second relay (610) is in the open state and the first relay (600) is in the closed state.

3. The electric working machine (1) according to claim 1 or 2, wherein the electric circuit (6) is configured such that a rated current value of the first electric path (60) and a rated current value of the second electric path (61) during energization are equal to or substantially equal to each other.

4. The electric working machine (1) according to claim 3, wherein
the first electric path (60) and the second electric path (61) each include an electric conductor (601, 611) to conduct electricity; and
a cross-sectional area of the electric conductor (601) of the first electric path (60) and a cross-sectional area of the electric conductor (611) of the second electric path (61) are defined such that the rated current value of the first electric path (60) and the rated current value of the second electric path (61) during energization are equal to or substantially equal to each other.

5. The electric working machine (1) according to claim 4, wherein
the first electric path (60) includes the first relay (600) and a first bus bar (601) which is the electric conductor (601) to couple the first relay (600) and the electric device (IV);
the second electric path (61) includes the second relay (610) and a second bus bar (611) which is the electric conductor (611) to couple the second relay (610) and the charging port (CP); and
a cross-sectional area of the first bus bar (601) and a cross-sectional area of the second bus bar (611) are defined to be equal to or substantially equal to each other.

6. The electric working machine (1) according to claim 5, wherein at least one of the first electric path (60) or the second electric path (61) includes a third bus bar (630) to be connected to the other of the first electric path (60) or the second electric path (61), the third bus bar (630) including, as the junction point (JP), a connection point to be connected to the other of the first electric path (60) or the second electric path (61).

7. The electric working machine (1) according to claim 5 or 6, wherein
the third electric path (62) includes the protective fuse (620) and a fourth bus bar (640) to be connected to the protective fuse (620); and
a cross-sectional area of the fourth bus bar (640) is defined to be equal to or substantially equal to the cross-sectional area of the first bus bar (601) and the cross-sectional area of the second bus bar (611).

8. The electric working machine (1) according to any one of claims 1 to 7, wherein
the battery (B1, B2) includes a plurality of the batteries (B1, B2); and
the third electric path (62) leads to the plurality of batteries (B1, B2), to the first electric path (60), and to the second electric path (61).

9. The electric working machine (1) according to any one of claims 1 to 8, further comprising a controller (8) configured or programmed to control the opening and closing of the first relay (600) and of the second relay (610).

10. The electric working machine (1) according to any one of claims 1 to 7, further comprising:
a traveling device (2) to travel;
a working device (3) to perform predetermined work;
a hydraulic system (HS) including a hydraulic pump (P) and configured to actuate the traveling device (2) and the working device (3) by hydraulic fluid delivered by the hydraulic pump (P); and
an electric motor (EM) to drive the hydraulic pump (P); wherein
the electric device (IV) is an inverter (IV) to control drive of the electric motor (EM).
